# EUROPÄISCHE PATENTSCHRIFT

(11) **EP 0 583 299 B1**
(45) Veröffentlichungstag und Bekanntmachung des Hinweises auf die Patenterteilung: **23.12.1998**
(21) Anmeldenummer: 92909439.9
(22) Anmeldetag: 30.04.1992
(51) Int. Cl.: C07F 7/16, C01B 33/02

(54) **FEINTEILIGES SILICIUM MIT OBERFLÄCHLICH GEBUNDENEM HALOGEN, VERFAHREN ZU DESSEN HERSTELLUNG UND DESSEN VERWENDUNG**
FINELY DIVIDED SILICON INCORPORATING A SURFACE-BOUND HALOGEN, A PROCESS FOR ITS MANUFACTURE AND THE USE THEREOF
SILICIUM FINEMENT DIVISE A HALOGENE LIE EN SURFACE, PROCEDE DE PRODUCTION ET D'UTILISATION DUDIT SILICIUM

(30) Priorität: 09.05.1991 DE 4115183
(43) Veröffentlichungstag der Anmeldung: 23.02.1994
(73) Patentinhaber: BAYER AG, 51368 Leverkusen (DE)
(72) Erfinder: SCHULZE, Manfred, D-5653 Leichlingen 1 (DE); RINKES, Hans, D-5000 Köln 80 (DE); LICHT, Elke, D-5090 Leverkusen 3 (DE); BÖRSTING, Alfred, D-5460 Linz (DE); DEGEN, Bruno, D-5203 Much (DE); MORETTO, Hans-Heinrich, D-5090 Leverkusen 3 (DE); WAGNER, Gebhard, D-5068 Odenthal (DE)
(86) Internationale Anmeldenummer: EP9200943
(87) Internationale Veröffentlichungsnummer: WO9219626

(56) Entgegenhaltungen:
- EP-A- 0 440 414
- DE-B- 1 155 128
- DE-C- 920 187
- GB-A- 804 068
- US-A- 4 966 986
- CHEMICAL ABSTRACTS, vol. 77, no. 13, 1972, Columbus, Ohio, US; abstract no. 87550, IVANOVA, N.T. ET AL: 'DECOMPOSITION OF METHYL CHLORIDE ON A SILICON- COPPER ALLOY STUDIED BY A CHROMATOGRAPHIC METHOD' Seite 376 ;
- JOURNAL OF ORGANOMETALLIC CHEMISTRY Bd. 376, Nr. 2-3, 1989, Seiten 165 - 222; CLARKE, M.P.: 'THE DIRECT SYNTHESIS OF METHYLCHLOROSILANES'
- JOURN.OF GENERAL CHEM. OF THE USSR, vol., no.45, 1975, page 703 - 800, ''
- BULLETIN OF THE ACADEMY OF SCIENCE OF THE USSR, vol.22, no.12, 1973, page 2672 - 2676, ''
- Book no. , , 'GMELINS HANDBOOK,SILICIUM, TEIL B,N 15, SEITE 15', ,

## Beschreibung

Die vorliegende Erfindung betrifft ein Verfahren zur Herstellung von Organohalogensilanen bei der Rochow-Synthese.

Feinteiliges Silicium wird großtechnisch insbesondere in großen Mengen zur Herstellung von Organochlorsilanen, insbesondere von Methylchlorsilanen, durch direkte Umsetzung mit Methylchlorid in Gegenwart von Kupferkatalysatoren sowie gegebenenfalls weiteren Promotorsubstanzen ("Rochow-Synthese", US-A 2 380 905) eingesetzt.

Eine Vielzahl auch jüngerer Arbeiten konzentrieren sich auf den gezielten Einsatz von Spurenelementen, den sogenannten Promotoren im Katalysatorsystem, um die Reaktion effektiver zu gestalten: siehe z.B. DE-A 3 425 424, EP-A 138 678, EP-A 138 679, DE-A 3 501 085, EP-A 191 502, EP-A 194 214, EP-A 195 728, EP-A 223447 oder Gmelins Handbuch, Anorganische Chemie, Silicium Teil B, n° 15, S. 15.

Andere Arbeiten befassen sich mit Reinheitsanforderungen bzw. physikalischen Kenngrößen des für die Rochow-Synthese geeigneten Siliciums: Siehe z.B. US-A 3 133 109, US-A 4 500 724 und EP-A 350 683.

Aus J. Organomet. Chem. Bd. 376 (1989), S. 165 ff. ist bekannt, daß η-Cu₃Si die katalytisch aktive Spezies bei der Methylchlorsilansynthese ist. η-Cu₃Si ist jedoch nur dann wirksam, wenn sich bei der Reaktion ein mit Methylchlorid Chlor oberflächlich an das Kupfersilicid anbindet.

Die vorliegende Erfindung beruht auf umfangreichen Untersuchungen über den Einfluß der Oberfläche von feinteiligem Silicium auf die Rochow-Synthese. Aus. J. of General Chem. of the USSR, 45(4), 1975, S. 703-800 ist bekannt, daß die Behandlung der Siliciumoberfläche mit HF oder Cl₂ die Bildung einer aktiven Kontaktmasse für die Rochow Reaktion begünstigt. Bulletin of the acadamy of science of the USSR, Vol 22, n° 12, 1973, S. 2672-2676 führt ergänzend dazu aus, daß die Vorbehandlung von Silicium mit HCI oder Cl₂ zu einer aktiveren Rochow Kontaktmasse führt, die jedoch auch ein starkes Potential für Crackprozesse (Zersetzung von Methylchlorid) aufweist. Obwohl Silicium relativ reaktionsträge ist, und daher an der Atmosphäre kaum Veränderungen eintreten, durchläuft das Silicium bei der Herstellung feiner Teilchen mit Korngrößen zwischen 20 und 500 um (je nach dem jeweils benutzten Reaktorsystem für die Rochow-Synthese) Stadien hoher Reaktivität. Solche Stadien hoher Reaktivität sind z.B. frisch gebrochene Oberflächen, wenn die Herstellung des feinteiligen Silicium durch Vermahlen von grobteiligem Silicium erfolgt, oder die Oberfläche von Silicium-Schmelzetröpfchen oder das bereits erstarrte feinteilige Silicium bei Temperaturen oberhalb etwa 1000°C wenn das feinteilige Silicium durch Verdüsen einer Siliciumschmelze gewonnen wird.

Es wurde nun gefunden, daß die Reaktivität (d.h. Umsatzrate und Selektivität bzgl. Bildung von Dimethyldichlorsilan beim Umsatz mit Methylchlorid) des feinteiligen Siliciums durch oberflächlich gebundenes Chlor vorteilhaft beeinflußt werden kann.

Gegenstand der vorliegenden Erfindung ist ein Verfahren zur Herstellung von Organosilanen durch Umsetzung von feinteiligem Silicium mit einem Alkyl- und/oder Arylchlorid in Gegenwart eines Kupferkatalysators und gegebenenfalls Promotorsubstanzen, wonach als feinteiliges Silicium ein Silicium eingesetzt wird, das hergestellt wurde
a) durch Mahlen von grobteiligem Silicium in feinteiliges Silicium in Gegenwart von Siliciumtetrahalogenid oder
b) durch Erhitzen von feinteiligem Silicium auf eine Temperatur von mindestens 900°C unter anschließendem Einwirkenlassen von in einer Schutzgasatmosphäre enthaltenem Siliciumtetrachlorid oder
c) durch Erhitzen von feinteiligem Silicium in einer Siliciumtetrachloridatmosphäre unter anschließendem Einleiten des behandelten Siliciums in flüssiges Siliciumtetrachlorid, das mit der Atmosphäre aus Siliciumtetrachlorid in Verbindung steht, oder
d) durch Schmelzen von Silicium und Verdüsen der erhaltenen Schmelze in einer Atmosphäre aus Siliciumtetrachlorid oder
e) durch Schmelzen von Silicium und Zerteilen der erhaltenen Schmelze in einem mit hoher Geschwindigkeit zugeführten Gasstrom, der zumindest teilweise dampfförmiges Siliciumtetrachlorid enthält, oder
f) durch Schmelzen von Silicium und Zerteilen der erhaltenen Schmelze in einem Strom eines Alkyl- und/oder Arylchlorid-Gases.

Erfindungsgemäß soll mindestens jedes 1/1000, vorzugsweise mindestens 1/100 Oberflächenatom des eingesetzten feinteiligen Siliciums ein Halogenatom sein. Maximal soll jedes zweite Oberflächenatom ein Halogenatom sein. Besonders bevorzugt beträgt das Verhältnis von Siliciumatomen zu Halogenatomen zwischen 3 und 20. Die Teilchengröße des erfindungsgemäßen feinteiligen Siliciums wird durch den beabsichtigten Einsatzzweck bestimmt. Sie liegt im allgemeinen zwischen 20 und 500 µm Durchmesser. Für den Einsatz bei der Rochow-Synthese wird eine mittlere Teilchengröße zwischen 80 und 200 µm Durchmesser bevorzugt, wobei das Kornspektrum zwischen 40 und 400 um Durchmesser liegen kann.

Obwohl die Untersuchungen im Rahmen der vorliegenden Erfindung im Hinblick auf den Einsatz des feinteiligen Siliciums bei der Rochow-Synthese durchgeführt wurden, ist anzunehmen, daß das erfindungsgemäße feinteilige Silicium auch bei anderen chemischen Reaktionen mit Silicium vorteilhaft eingesetzt werden kann, sofern das oberflächlich vorhandene Halogen nicht stört.

Eine Ausführungsform des erfindungsgemäßen Herstellungsverfahren besteht darin, daß grobteiliges Silicium in Siliciumtetrachlorid gemahlen wird. Die reaktionsfähige Form des Siliciums wird dabei durch die jeweils entstehenden frisch gebrochenen Oberflächen darstellt. Die Mahlung kann sowohl in Suspension mit dem Suspensionsmedium Siliciumtetrachlorid erfolgen oder bei einer Temperatur oberhalb des Siedepunktes des Siliciumtetrachlorid von 57,6°C in einer Atmosphäre von Siliciumtetrachlorid. Bevorzugt erfolgt die Vermahlung in einer geschlossenen Mühle, deren Atmosphäre vollständig durch Siliciumtetrachlorid ausgetauscht ist. Im Falle anderer Halogene wird die Temperatur der Mühle jeweils über die Siedetemperatur der jeweiligen Siliciumtetrahalogenide erhöht (SiBr₄: 152,8°C, SiJ₄: 287,5°C).

Nach einer weiteren Variante des erfindungsgemäßen Verfahrens wird bereits feinteiliges unbehandeltes Silicium vorgelegt und durch Erhitzen auf eine Temperatur von mindestens 900°C in die reaktionsfähige Form gebracht und anschließend einer Schutzgasatmosphäre, die Siliciumtetrachlorid enthält, ausgesetzt. Als Schutzgasatmosphäre kann z.B. Stickstoff eingesetzt werden. Die notwendige Reaktionszeit hängt einerseits von der Temperatur des Siliciums und dem Gehalt an Siliciumtetrachlorid in der Atmosphäre ab. Reaktionszeiten von wenigen Sekunden sind im allgemeinen ausreichend.

Eine bevorzugte Ausführungsform dieser Verfahrensvariante besteht darin, daß man feinteiliges Silicium durch ein auf oberhalb 1000°C, vorzugsweise zwischen 1100 und 1300°C, erhitztes Graphitrohr rieseln läßt, wobei unterhalb des Graphitrohres ein flüssiges Siliciumtetrachlorid enthaltender Behälter zum Auffangen des feinteiligen Siliciums angeordnet ist. Das feinteilige Silicium wird beim Durchrieseln des Graphitrohres, in dem sich eine Atmosphäre aus Siliciumtetrachlorid befindet, hoch erhitzt, so daß es mit dem Siliciumtetrachlorid oberflächlich reagiert. Beim Austreten aus dem unteren Ende des Graphitrohres verlieren die Siliciumteilchen sehr schnell durch Strahlung ihre Temperatur und werden beim Eintauchen in das flüssige Siliciumtetrachlorid abgeschreckt, so daß die Reaktion beendet wird. Das erhaltene feinteilige Silicium mit oberflächlich gebundenem Chlor wird am Boden des Siliciumtetrachlorid-Behälters als Suspension abgezogen und von der Suspensionsflüssigkeit getrennt.

Das Siliciumtetrachlorid in dem Auffangbehälter wird vorzugszueise bei einer Temperatur knapp unterhalb des Siedepunktes gehalten, so daß hierdurch die Atmosphäre in dem Graphitrohr gesteuert werden kann.

Als feinteiliges Silicium wird bei dem erfindungsgemäßen Verfahren vorzugsweise durch Verdüsen aus der Schmelze gewonnenes feinteiliges Silicium eingesetzt.

Die besonders bevorzugte Variante des erfindungsgemäßen Verfahrens besteht darin, daß eine Siliciumschmelze in einer Atmosphäre aus Siliciumtetrachlorid verdüst wird. Vorzugsweise erfolgt die Verdüsung nach dem sogenannten Teller-Schleuder-Verfahren, bei dem ein aus einem die Schmelze bei ca. 1600°C enthaltenden Tiegel austretender Schmelzfaden auf einen sich mit hoher Umfangsgeschwindigkeit drehenden Teller auftrifft und von diesem tangential abgeschleudert wird, so daß die Schmelze in feinteilige Tröpfchen versprüht wird. Der Schleuderteller befindet sich in einem Behälter der eine Atmosphäre aus Siliciumtetrachlorid enthält und dessen konisch zulaufender Boden durch geeignete Kühlung flüssiges Siliciumtetrachlorid nahe unterhalb der Siedetemperatur des Siliciumtetrachlorids, z.B. bei 40°C, enthält. Das von dem Schleuderteller abgeschleuderte feinteilige Silicium reagiert mit dem Siliciumtetrachlorid, kühlt in der Siliciumtetrachloridatmosphäre schnell ab und wird am Boden des Gefäßes in dem flüssigen Siliciumtetrachlorid gesammelt, von wo es kontinuierlich abgezogen und von anhaftendem Siliciumtetrachlorid getrennt werden kann.

Die Aufrechterhaltung eines Flüssigkeitsniveaus von Siliciumtetrachlorid am Boden des Behälters erfolgt vorzugsweise so, daß ständig entstehender Siliciumtetrachlorid-Dampf aus dem Verdüsungsbehälter abgezogen wird, der Dampf kondensiert und gekühlt wird und flüssiges gekühltes Siliciumtetrachlorid in der Nähe des Flüssigkeitsspiegels des Verdüsungsbehälters wieder zugeführt wird.

Eine besonders bevorzugte Variante des Tellerschleuderverfahrens besteht darin, daß Siliciumtetrachlorid in flüssiger Form als Kühlmedium auf den Schleuderteller kontinuierlich aufgebracht ist. Ein solches Verfahren und die dazu geeignete Vorrichtung ist in US-A 4 347 199 beschrieben.

Eine insbesondere für die großtechnische Herstellung des erfindungsgemäßen feinteiligen Siliciums besteht darin, daß die Siliciumschmelze durch die Wirkung von mit hoher Geschwindigkeit strömenden Gasen zerteilt wird, wobei als Gas zumindest teilweise dampfförmiges Siliciumtetrachlorid eingesetzt wird. Eine für dieses Verfahren geeignete Vorrichtung ist in US-A 4 469 313 beschrieben.

Das nach dem erfindungsgemäßen Verfahren erhaltene feinteilige Silicium hydrolysiert oberflächlich mit Feuchtigkeit unter Bildung von Halogenwasserstoff. Eine Zwischenlagerung erfolgt daher unter Umgebungsluft-Abschluß, z.B. in trockener Luft oder Stickstoff.

Besondere Vorteile bietet das erfindungsgemäße erfahren, wenn es direkt mit der anschließenden Rochow-Synthese zur Herstellung von Dimethyldichlorsilan kombiniert wird.

Das Kombinationsverfahren besteht darin, daß flüssiges Silicium unter der Einwirkung von Gasstrahlen zerteilt wird, wobei als Gasstrahlen Methylchlorid eingesetzt wird Man erhält ein in Methylchlorid-Gas suspendiertes feinteiliges Silicium mit oberflächlich gebundenem Chlor, das nach Abkühlung auf etwa 300°C direkt in den als Wirbelbettreaktor ausgebildeten Rochowreaktor gefördert wird.

### Beispiel 1

Siliciumpulver (Typ A: Fremdmetallgehalt: 0,26 % Fe, 0,14 % Al, 0,058 % Ca, 0,022 % Ti; Kornverteilung 71-160 µm) wird in ein Quarzrohr (innerer Durchmesser = 22 mm, Länge = 59 cm) gefüllt und unter N₂-Atmosphäre auf 900°C erhitzt.

Nach dem die Temperatur von 900°C erreicht worden ist, wird die N₂-Atmosphäre durch eine SiCl₄-Atmosphäre (sukzessives Verdampfen von 100 ml SiCl₄) ersetzt und für weitere 2 h auf 900°C erhitzt.

Das Siliciumpulver wird unter N₂-Atmosphäre auf Raumtemperatur abgekühlt.

40 g dieses Siliciumpulver werden zusammen mit 3,2 g Kupferkatalysator und 0,05 g ZnO unter N₂-Atmosphäre in einen Rührbettreaktor aus Glas, innerer Durchmesser = 30 mm, der mit einem Spiralrührer ausgestattet ist, gefüllt und homogenisiert. Methylchlorid wurde unter einem Druck von 2 bar von unten über eine Glasfritte durch die Kontaktmasse geleitet. Der Methylchloridstrom wurde konstant gehalten und betrug ca. 1,8 l/h. Nach dem Aufheizen und Anspringen der Reaktion wurde eine stationäre Versuchsphase bei 300°C eingestellt und unter so festgelegten Bedingungen der Dimethyldichlorsilananteil relativ zum anfallenden Gemisch aus monomeren Silanen bestimmt.

Als Mittelwert aus vier Einzelbestimmungen wird ein Dimethyldichlorsilan-Gehalt von 91,4 Gew.-% erhalten.

### Beispiel 2 (Vergleichsbeispiel)

Bei der Umsetzung von unbehandelten Siliciumpulver (Typ A: wie in Beispiel 1) unter denselben Bedingungen wie in Beispiel 1 wird ein Dimethyldichlorsilan-Anteil an monomeren Silangemisch von 90,8 Gew.-% erzielt.

### Beispiel 3

70 g grobkörniges Silicium (Typ B: Kornverteilung: < 5 mm, Fremdmetallspezifikation; 0,38 % Fe; 0,15 % Al; 0,005 % Ca; 0,02 % Ti) wurden in einer Mörsermühle (Fa. Retsch, Bauart KM 1) in 70 ml Siliciumtetrachlorid suspendiert und 2 min gemahlen. Diese Suspension wird unter N₂-Atmosphäre filtriert, und das Siliciumpulver (1 h, Wasserstrahlvakuum) getrocknet.

40 g des so präparierten Siliciumpulver (D₅₀ = 82 µm) werden zusammen mit Kupferkatalysator und ZnO unter N₂-Atmosphare in den in Beispiel 1 beschriebenen Rührbettreaktor gefüllt, homogenisiert und bei den in Beispiel 1 beschriebenen Bedingungen umgesetzt.

Der so gefundene Gehalt an Dimethyldichlorsilan beträgt 91,2 Gew.-%.

### Beispiel 4 (Vergleichsbeispiel)

Silicium (Typ B: Spezifikationen s. Beispiel 3) wird nun ohne Siliciumtetrachlorid-Zusatz in analoger Weise in der Mörsermühle gemahlen (s. Beispiel 3).

40 g dieses unbehandelten Siliciumpulvers werden zusammen mit 3,2 g Kupferkatalysator und 0,05 g ZnO bei Randbedingungen gemäß Beispiel 1 umgesetzt.

Es wird ein Dimethyldichlorsilan-Gehalt von 90 Gew.-% erhalten.

### Beispiel 5

In einer Laborzerstäubungsanlage, die ähnlich der in US-A 4 347 199 beschriebenen aufgebaut ist, wurde Silicium (Typ A: siehe Beispiel 1) geschmolzen und mittels eines Schleudertellers, auf den zentral flüssiges SiCl₄ als Kühlmittel aufgebracht wurde, in einer SiCl₄-Atmosphäre zerstäubt.

Der hinsichtlich der Zerstäubungsbedingungen nicht optimierte Versuch ergab ein Si-Pulver sehr unterschiedlicher Korngröße.

Aus dem erhaltenen Silciumpulver wurde eine Kornfraktion von 75 bis 150 µm Durchmesser (Siebgröße) durch Sieben unter stickstoffatmosphäre gewonnen.

40 g des Siliciumpulvers werden unter den Bedingungen des Beispiel 1 mit Methylchlorid umgesetzt. Es werden stündlich 6,8 g Silangemisch mit 91,8 Gew.-% Dimethyldichlorsilan erhalten.

### Beispiel 6

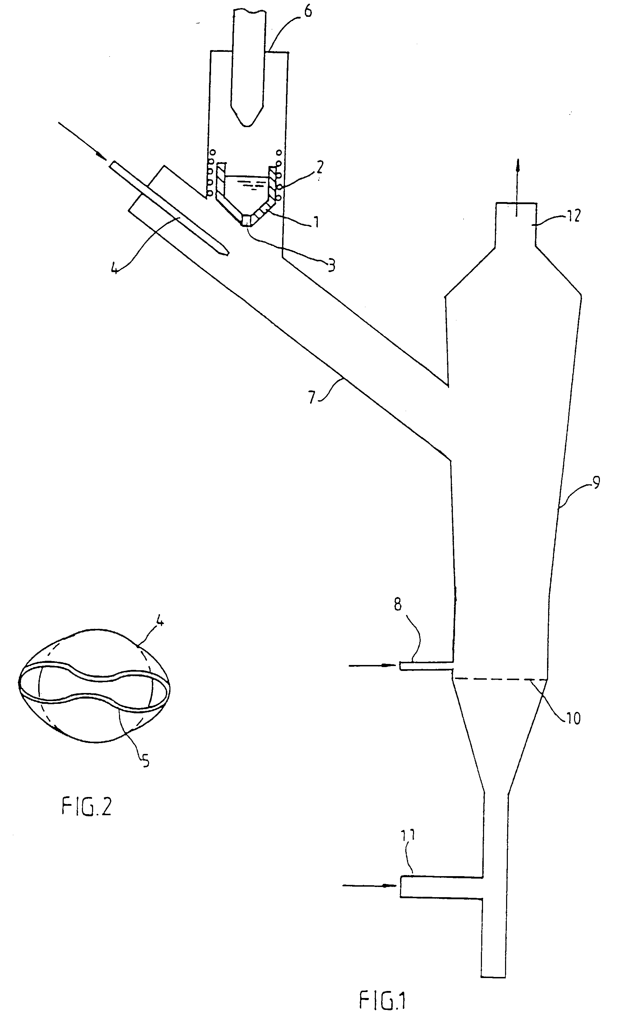

In einer schematisch in Fig. 1 dargestellten Vorrichtung wird in einem Graphittiegel 1 mit Heizung 2 Silizium Typ A (s. Beispiel 1) aufgeschmolzen. Flüssiges Silicium tritt durch die Öffnung 3 im Boden des Tiegels 1 aus. Mittels einer Schlitzdüse 4, die aus einem an der Mündung zusammengebogenen (siehe 5 in Fig. 2) Edelstahlrohr bestand, wurde ein Strahl von gasförmigem Methylchlorid auf den aus der Tiegelöffnung 3 austretenden Siliciumschmelzestrom gerichtet, so daß dieser in feine Tröpfchen zerteilt wurde.

Durch Absenken des Siliziumbarrens 6 wurde der Tiegel 1 kontinuierlich über mehrere Stunden nachgefüllt.

Das Strömungsrohr 7 mündet in einen Reaktor 9, in den unten (11) durch einen Lochboden 10 soviel auf 300°C aufgeheiztes Methylchlorid und Stickstoff eingeleitet wird, daß das Siliciumpulver im Reaktor aufgewirbelt bleibt, aber nicht oben (12) ausgetragen wird. Der Reaktor 9 hat im Bereich der Einmündung des Lochbodens 10 einen Innendurchmesser von 4 cm und erweitert sich bis zu seiner breitesten Stelle auf die sechsfache Querschnittfläche, Seine Länge beträgt 110 cm. Die Temperatur des Reaktors 9 wird bei 300°C gehalten. Es werden stündlich 160 g Silicium verdüst.

Am unteren Ende des Reaktors 9 wurde periodisch durch ein Ansatzrohr 8 eine sehr feinteilige (<10 µm) Katalysatormischung aus Kupferkatalysator und ZnO pneumatisch mit Stickstoff in den das Siliciumpulver fördernden Methylchloridstrom eingebracht, so daß im Mittel auf je 100 g Silicium 8 g Kupferkatalysator und 0,125 ZnO eingesetzt wurden.

An Kopf 12 des Reaktors treten Produktgase, nicht umgesetztes Methylchlorid und Stickstoff aus. Durch Kondensation werden die Produktgase abgetrennt.

Der Dimethyldichlorsilangehalt in dem erhaltenen Silangemisch beträgt 93,8 Gew.-% (nach 5 Stunden Betrieb).

### Beispiel 7 (Vergleichsbeispiel)

Beispiel 6 wird so abgewandelt, daß durch die Düse 4 Stickstoff anstelle von Methylchlorid eingeblasen wird. Bei 11 wird der neben Methylchlorid eingeblasene Stickstoff durch Methylchlorid ersetzt, so daß das Verhältnis von Stickstoff und Methylchlorid im Reaktor 9 dem aus Beispiel 6 entspricht.

Der Dimethyldichlorsilangehalt im erhaltenen Silangemisch beträgt 91,0 Gew.-%.

### Beispiel 8 (Vergleichsbeispiel)

Beispiel 7 wird so abgewandelt, daß der Tiegel 1 ausgebaut wird und die Düse 4 durch ein Zufuhrrohr ersetzt wird, durch das 160 g/h gemahlenes Silicium pneumatisch mittels Stickstoff nach Vorheizung auf 300°C eingeblasen wird. Der Dimethyldichlorsilangehalt im erhaltenen Silangemisch beträgt 90,2 Gew.-%.

## Patentansprüche

1. Verfahren zur Herstellung von Organosilanen durch Umsetzung von feinteiligem Silicium mit einem Alkyl- und/oder Arylchlorid in Gegenwart eines Kupferkatalysators und gegebenenfalls Promotorsubstanzen, dadurch gekennzeichnet, daß als feinteiliges Silicium ein Silicium eingesetzt wird, das hergestellt wurde
a) durch Mahlen von grobteiligem Silicium in feinteiliges Silicium in Gegenwart von Siliciumtetrahalogenid oder
b) durch Erhitzen von feinteiligem Silicium auf eine Temperatur von mindestens 900°C unter anschließendem Einwirkenlassen von in einer Schutzgasatmosphäre enthaltenem Siliciumtetrachlorid oder
c) durch Erhitzen von feinteiligem Silicium in einer Siliciumtetrachloridatmosphäre unter anschließendem Einleiten des behandelten Siliciums in flüssiges Siliciumtetrachlorid, das mit der Atmosphäre aus Siliciumtetrachlorid in Verbindung steht, oder
d) durch Schmelzen von Silicium und Verdüsen der erhaltenen Schmelze in einer Atmosphäre aus Siliciumtetrachlorid oder
e) durch Schmelzen von Silicium und Zerteilen der erhaltenen Schmelze in einem mit hoher Geschwindigkeit zugeführten Gasstrom, der zumindest teilweise dampfförmiges Siliciumtetrachlorid enthält, oder
f) durch Schmelzen von Silicium und Zerteilen der erhaltenen Schmelze in einem Strom eines Alkyl- und/oder Arylchlorid-Gases.

2. Verfahren nach Anspruch 1, dadurch gekennzeichnet, daß das flüssige Siliciumtetrachlorid bei einer Temperatur knapp unterhalb des Siedepunktes gehalten wird.

## Claims

1. Process for producing organosilanes by reaction of finely divided silicon with an alkyl and/or aryl chloride in the presence of a copper catalyst and, optionally, promoter substances, characterised in that by way of finely divided silicon use is made of a silicon that was produced
a) by grinding coarsely divided silicon into finely divided silicon in the presence of silicon tetrahalide or
b) by heating finely divided silicon to a temperature of at least 900°C and subsequently allowing it to react with silicon tetrachloride contained in a protective-gas atmosphere or
c) by heating of finely divided silicon in an atmosphere of silicon tetrachloride and by subsequent introduction of the treated silicon into liquid silicon tetrachloride which is in communication with the atmosphere of silicon tetrachloride, or
d) by melting of silicon and by nozzle atomisation of the melt thus obtained in an atmosphere of silicon tetrachloride or
e) by melting of silicon and division of the melt thus obtained in a gas stream supplied at high speed which contains, at least partially, vaporous silicon tetrachloride, or
f) by melting of silicon and division of the melt thus obtained in a stream of an alkyl-chloride and/or aryl-chloride gas.

2. Process according to Claim 1, characterised in that the liquid silicon tetrachloride is maintained at a temperature just below the boiling-point.

## Revendications

1. Procédé pour la préparation d'organosilanes par réaction d'un silicium en fines particules avec un chlorure d'alkyle et/ou d'aryle en présence d'un catalyseur au cuivre et le cas échéant de substances activatrices, caractérisé en ce que l'on met en oeuvre un silicium en fines particules qui a été préparé
a) par broyage en fines particules d'un silicium en grains grossiers en présence d'un tétrahalogénure de silicium, ou bien
b) par chauffage d'un silicium en fines particules à une température d'au moins 900°C suivi de l'exposition à du tétrachlorure de silicium contenu dans une atmosphère de gaz protecteur, ou bien
c) par chauffage d'un silicium en fines particules dans une atmosphère de tétrachlorure de silicium suivi de l'injection du silicium traité dans du tétrachlorure de silicium liquide en liaison avec l'atmosphère de tétrachlorure de silicium, ou bien
d) par fusion du silicium et pulvérisation de la masse fondue dans une atmosphère de tétrachlorure de silicium, ou bien
e) par fusion du silicium et pulvérisation de la masse fondue dans un courant gazeux à haute vitesse contenant en partie au moins du tétrachlorure de silicium à l'état de vapeur, ou bien
f) par fusion du silicium et pulvérisation de la masse fondue dans un courant de chlorure d'alkyle et/ou d'aryle gazeux.

2. Procédé selon la revendication 1, caractérisé en ce que le tétrachlorure de silicium liquide est maintenu à une température peu inférieure au point d'ébullition.
